# EUROPEAN PATENT APPLICATION

(11) **EP 4 650 583 A1**
(43) Date of publication of application: **19.11.2025**
(21) Application number: 24175616.2
(22) Date of filing: 14.05.2024
(51) Int. Cl.: F02C 1/02, F02C 3/22

(54) **A PRESSURE REDUCTION UNIT FOR RECOVERY OF GAS COMPRESSION WORK**

(71) Applicant: VOLVO TRUCK CORPORATION, 405 08 Göteborg (SE)
(72) Inventor: HINDI, Gustavo, 449 50 Alafors (SE); KOOPMANS, Lucien, 429 31 Kullavik (SE); RAHM, Fredrik, 242 96 Hörby (SE)
(74) Representative: Zacco Sweden AB

(57) **Abstract**

The disclosure relates to a pressure reduction unit (10) for recovery of gas compression work, where the pressure reduction unit (10) comprises an expansion stage (12) comprising at least one expander (14). The expansion stage (12) is arranged to be connected to a high-pressure gas supply (1) at a high-pressure expansion stage end (12a) and to be connected to a low-pressure gas consumer (16) at a low-pressure expansion stage end (12b). The expansion stage (12) further comprises a contactless power transfer device arranged to provide mechanical power to an external mechanical load (18). A bearing arranged at the interface between the high-pressure gas supply (1) and the high-pressure expansion stage end (12a) is a non-contact bearing. The disclosure further relates to a fuel delivery system (30) and a gas delivery system (40) comprising a pressure reduction unit (10).

## Description

### TECHNICAL FIELD

The disclosure relates generally to delivery of high-pressure gas to a low-pressure gas consumer. In particular aspects, the disclosure relates to a pressure reduction unit for recovery of gas compression work. The disclosure can be applied to heavy-duty vehicles, such as trucks, buses, and construction equipment, among other vehicle types. Although the disclosure may be described with respect to a particular vehicle, the disclosure is not restricted to any particular vehicle. The disclosure may also relate to power generating equipment and to gas delivery systems.

### BACKGROUND

In vehicles or equipment that uses gas as a fuel for operation, gas is usually compressed and stored at a high pressure. For instance, in a fuel cell electric vehicle (FCEV), the fuel stored in the Hydrogen Storage System (HSS) is stored at 35 or 70 MPa in gas phase. This pressure is much higher than the pressure required by the fuel cell fuel feeding system. Thus, the high pressure of the fuel stored must be reduced in some way down to around 1.6 MPa to be feed to the fuel cell. One example of pressure reduction is by one or more pressure reduction valves. In this pressure reduction event, all compression energy that is stored in the high-pressure gas is lost.

There is thus a need for improvement within this field.

### SUMMARY

According to a first aspect of the disclosure, a pressure reduction unit for recovery of gas compression work comprises an expansion stage comprising at least one expander, wherein the expansion stage is arranged to be connected to a high-pressure gas supply at a high-pressure expansion stage end and to be connected to a low-pressure gas consumer at a low-pressure expansion stage end, wherein the expansion stage further comprises a contactless power transfer device arranged to provide mechanical power to an external mechanical load, wherein a bearing is arranged at the interface between the high-pressure gas supply and the high-pressure expansion stage end is a non-contact bearing. The first aspect of the disclosure may seek to recover the gas compression work during for instance a vehicle cycle operation and to transfer the recovered work to an external mechanical load. The mechanical load can for instance be a mechanical transmission drive system that directly can benefit from the mechanical power provided. Alternatively, the mechanical power can be converted into electrical work and be used directly or converted into electrical work and be stored in an electrical power storage. A technical benefit may include that by extracting this energy, an additional fuel consumption reduction in a cycle can be obtained or power can be generated if the mechanical load is a generator.

Optionally in some examples, including in at least one preferred example, the non-contact bearing is a hydrodynamic fluid bearing using high-pressure gas from the high-pressure gas supply as the bearing fluid or a magnetic bearing. A technical benefit may include that such a bearing is suitable to handle the high rotational speeds that an expander shaft is spinning with.

Optionally in some examples, including in at least one preferred example, the expansion stage is arranged to provide low pressure gas to the low-pressure gas consumer with a low pressure in the range of between 0.5 and 5 MPa and to receive a high-pressure gas from the high-pressure gas supply with a high pressure in the range of 5 and 90 MPa, as long as the pressure in the high-pressure gas supply is higher than the low pressure. A technical benefit may include that the expansion stage can recover work over almost the entire pressure range of the high-pressure gas supply. This leads to that a large amount of work can be recovered in a cycle.

Optionally in some examples, including in at least one preferred example, the expansion stage comprises two expanders arranged in series. A technical benefit may include that the expansion stage can be dimensioned for various scenarios and that the first expander and the second expander can be dimensioned to recover work for different input pressures.

Optionally in some examples, including in at least one preferred example, a by-pass circuit comprising a by-pass valve is arranged between the two expanders. A technical benefit may include that only one of the expanders can be operational if necessary and the low-pressure gas can by-pass the second expander.

Optionally in some examples, including in at least one preferred example, the at least one expander is a multiple stage axial expander comprising a number of pressure reduction stages. The number of pressure reduction stages in the at least one expander may be between three and ten, specifically between five and eight. A technical benefit may include that the number of turbine stages can be optimized for the specified pressure range. Optimization considers the max pressure ratio, size, efficiency and flow range.

Optionally in some examples, including in at least one preferred example, the at least one expander is made of stainless steel, aluminium or titanium. A technical benefit may include that these materials provide the desired material characteristics for the high-pressure application of the expansion stage.

Optionally in some examples, including in at least one preferred example, a pressure regulation valve is arranged between the low-pressure expansion stage end and the low-pressure gas consumer. A technical benefit may include that the pressure regulation valve can fine-tune the final pressure being provided to the low-pressure gas consumer.

According to a second aspect of the disclosure, a fuel delivery system for a gas-powered engine comprises a high-pressure gas supply and a low-pressure gas consumer, wherein a pressure reduction unit according to the first aspect is arranged between the high-pressure gas supply and the low-pressure gas consumer to recover at least part of the gas compression work. The second aspect of the disclosure may seek to recover the gas compression work during operation of a gas-powered engine and to transfer the recovered work to an external mechanical load. A technical benefit may include that by extracting this energy, an additional fuel consumption reduction in a cycle can be obtained or power can be generated if the mechanical load is a generator.

Optionally in some examples, including in at least one preferred example, the low-pressure gas consumer is a gas engine or a fuel cell. A technical benefit may include increased running times of vehicles and equipment using a gas engine or a fuel cell.

Optionally in some examples, including in at least one preferred example, the low-pressure gas consumer is a low-pressure tank. A technical benefit may include that in some instances it is desirable to store the low-pressure gas before it is used.

Optionally in some examples, including in at least one preferred example, the high-pressure gas supply operates at a pressure in the range of between 5 and 90 MPa and the low-pressure gas consumer operates at a pressure in the range of between 0.5 and 5 MPa. A technical benefit may include that the expansion stage can recover work over almost the entire pressure range of the high-pressure gas supply. This leads to that a large amount of work can be recovered in a cycle.

According to a third aspect of the disclosure, a genset comprises a fuel delivery system according to the second aspect. The third aspect of the disclosure may seek to recover the gas compression work during operation of a genset and to transfer the recovered work to an external mechanical load. A technical benefit may include that by extracting this energy, an additional fuel consumption reduction in a cycle can be obtained or power can be generated if the mechanical load is a generator.

According to a fourth aspect of the disclosure, a vehicle comprises a fuel delivery system according to the second aspect. The fourth aspect of the disclosure may seek to recover the gas compression work during operation of a vehicle and to transfer the recovered work to an external mechanical load. A technical benefit may include that by extracting this energy, an additional fuel consumption reduction in a cycle can be obtained or power can be generated if the mechanical load is a generator.

Optionally in some examples, including in at least one preferred example, the vehicle is fuelled by compressed hydrogen gas or compressed natural gas. A technical benefit may include that such a vehicle will have an extended range due to the recovery of the compression work being converted into additional mechanical or electrical power that can be used by the vehicle.

Optionally in some examples, including in at least one preferred example, the vehicle is a heavy-duty vehicle, such as a truck, a bus, or a construction equipment vehicle. Optionally in some examples, including in at least one preferred example, the vehicle is a ship or a boat.

According to a fourth aspect of the disclosure, a gas delivery system for a gas fuelling pump comprises a high-pressure gas supply and a low-pressure gas fuel nozzle, wherein a pressure reduction unit according to the first aspect is arranged between the high-pressure gas supply and the low-pressure gas fuel nozzle to recover at least part of the gas compression work. A technical benefit may include that by recovering some of the work used to compress the gas, additional power can be generated that can be used elsewhere.

Optionally in some examples, including in at least one preferred example, the high-pressure gas supply operates at a pressure in the range of between 5 and 90 MPa and the low-pressure gas fuel nozzle operates at a pressure in the range of between 0.5 and 5 MPa. A technical benefit may include that the expansion stage can recover work over almost the entire pressure range of the high-pressure gas supply. This leads to that a large amount of work can be recovered.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary overview of a prior art pressure reduction system according to an example.
**FIG. 2** is an exemplary overview of a pressure reduction unit connected to a high-pressure gas supply and a low-pressure gas consumer at a low-pressure expansion stage end according to a first example.
**FIG. 3** is an exemplary overview of a pressure reduction unit connected to a high-pressure gas supply and a low-pressure gas consumer at a low-pressure expansion stage end according to a second example.
**FIG. 4** is an exemplary overview of a pressure reduction unit connected to a high-pressure gas supply and a low-pressure gas consumer at a low-pressure expansion stage end according to a third example.
**FIG. 5** is an exemplary overview of a pressure reduction unit connected to a high-pressure gas supply and a low-pressure gas consumer at a low-pressure expansion stage end according to a fourth example.
**FIG. 6** is an exemplary overview of an expander according to an example.
**FIG. 7a** is an exemplary overview of a fuel cell being fed with different fuel mass flow rates over a cycle.
**FIG. 7b** is an exemplary overview of the reduction of fuel tank gas pressure, given the fuel consumption of **FIG. 7a**.
**FIG. 8** is an exemplary overview of a vehicle comprising a fuel delivery system according to an example.
**FIG. 9** is an exemplary overview of a gas delivery system for a gas fuelling pump comprising a fuel delivery system according to an example.

### DETAILED DESCRIPTION

The detailed description set forth below provides information and examples of the disclosed technology with sufficient detail to enable those skilled in the art to practice the disclosure.

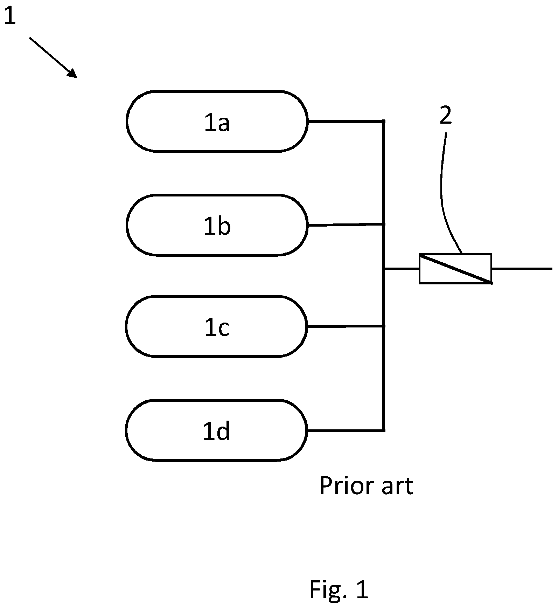

**FIG. 1** is an exemplary overview of a prior art pressure reduction system according to an example. The prior art pressure reduction system comprises a high-pressure gas supply 1 connected to a pressure reduction valve 2. The high-pressure gas supply comprises one or more high-pressure tanks, in the examples shown four separate tanks 1a, 1b, 1c, 1d.

As can be seen, there is no equipment in the prior art pressure reduction system that may take advantage of the work created during pressurisation of the gas for storing in the high-pressure gas supply 1.

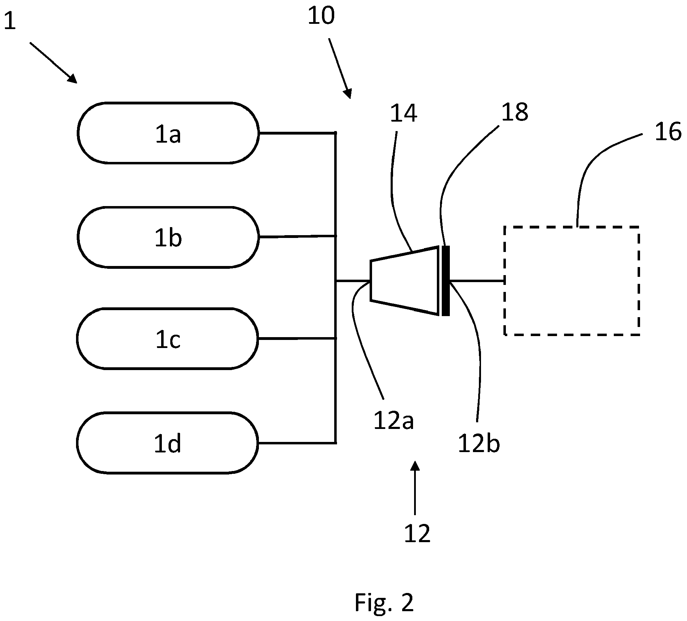

**FIG. 2** is an exemplary overview of a pressure reduction unit 10 connected to a high-pressure gas supply 1 and a low-pressure gas consumer 16 at a low-pressure expansion stage end 12b according to a first example.

The pressure reduction unit 10 is connected between the high-pressure gas supply 1 and the low-pressure gas consumer 16 for recovery of gas compression work. The pressure reduction unit 10 comprises an expansion stage 12 comprising at least one expander 14. The expansion stage 12 is arranged to be connected to the high-pressure gas supply 1 at a high-pressure expansion stage end 12a and to be connected to a low-pressure gas consumer 16 at a low-pressure expansion stage end 12b. The expansion stage 12 further comprises a contactless power transfer device arranged to provide mechanical power to an external mechanical load. In the examples of the figures, this is a generator 18 magnetically connected to the multiple stage axial expander(s). The generator is capable of recovering the work during the gas expansion process. A non-contact bearing is arranged at the interface between the high-pressure gas supply 1 and the high-pressure expansion stage end 12a.

The contactless power transfer device is in one example realised by a magnetic solution, e.g. a first magnet acting as a drive magnet arranged inside the expander and a second magnet that is driven by the drive magnet arranged outside the expander.

The work extracted during the expansion can be used directly by the usage of a mechanical transmission drive system, converted into electrical work and be used directly by a vehicle or power generation equipment or converted into electrical work and be stored in batteries. In this way, the contactless power transfer device may be arranged to drive an axle in a mechanical transmission drive system or to drive an axle in an electrical generator that converts the mechanical work into electrical work.

The non-contact bearing may be a hydrodynamic fluid bearing using high-pressure gas from the high-pressure gas supply 1 as the bearing fluid or it may be a magnetic bearing. In this way, the bearing avoids contamination of oil, lubricants or air dilution etc. of the gas media that is expanded. In order to create a load carrying fluid film that is capable of this, very high pressures are needed. The inlet pressure to the expander is used in combination with the fluid bearing that further increase the bearing pressure. Even though leakage in the bearing will be relatively high due to the pressure level in the bearing, this is also an expansion of the gas and the bearing leakage gas (or throughflow) joins the expander outlet gas flow and feeds the low-pressure gas consumer 16. This can be used for instance in a fuel cell or internal combustion engine application.

Another possible non-contact bearing solution is a magnetic bearing that is also beneficial from a non-contaminating and non-contact perspective. A magnetic bearing is also suitable for the high rotational speeds of the expander that will arise.

The expansion stage 12 is arranged to provide low pressure gas to the low-pressure gas consumer 16 with a low pressure in the range of between 0.5 and 5 MPa and to receive a high-pressure gas from the high-pressure gas supply 1 with a high pressure in the range of 5 and 90 MPa, as long as the pressure in the high-pressure gas supply is higher than the low pressure. This allows for operation of the pressure reduction unit from max tank pressure in the high-pressure of the high-pressure gas supply 1 to a tank pressure in the high-pressure gas supply 1 approaching the low pressure that the low-pressure gas consumer 16 requires. In this way, a large amount of work can be recovered.

The expander 14 arranged between the high-pressure gas supply 1 and the low-pressure gas consumer 16 is compact and works for the complete pressure range of the high-pressure gas supply 1.

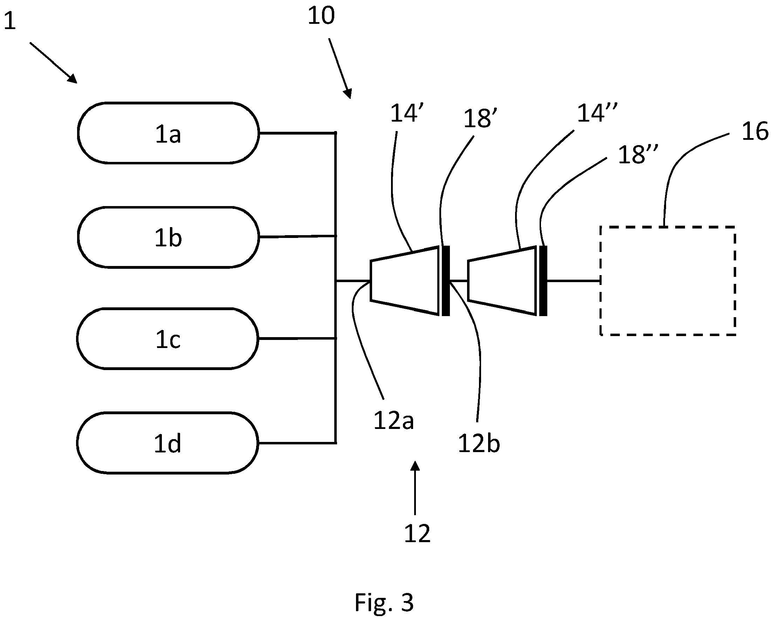

**FIG. 3** is an exemplary overview of a pressure reduction unit 10 connected to a high-pressure gas supply 1 and a low-pressure gas consumer 16 at a low-pressure expansion stage end 12b according to a second example. The difference between the pressure reduction unit 10 of **FIG. 3** and **FIG. 2** is that the expansion stage 12 of the pressure reduction unit 10 in **FIG. 3** comprises two expanders 14', 14" arranged in series. One or both of the expanders 14', 14" comprises a contactless power transfer device arranged to provide mechanical power to an external mechanical load, in this case generators 18', 18". In this way, the recovery of the gas compression work can be performed in two steps, with each step reducing part of the pressure. This leads to that the expansion stage can be dimensioned for various pressure reduction scenarios and that the first expander 14' and the second expander 14" can be dimensioned to recover work for different input pressures and does not have to be able to handle the recovery of work for the entire range of pressure.

More than two expanders are of course possible.

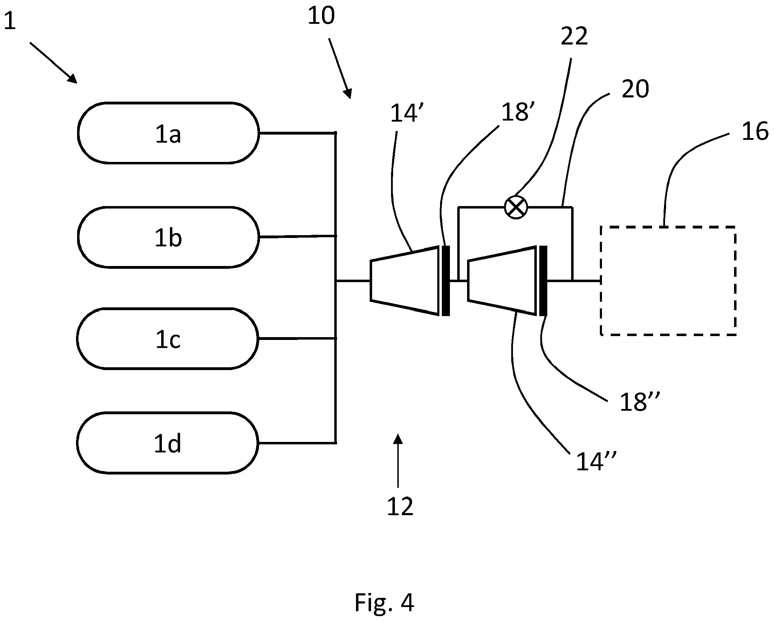

**FIG. 4** is an exemplary overview of a pressure reduction unit 10 connected to a high-pressure gas supply 1 and a low-pressure gas consumer 16 at a low-pressure expansion stage end 12b according to a third example. In this example, that builds on the example of **FIG. 3**, the pressure reduction unit 10 comprises a by-pass circuit 20 comprising a by-pass valve 22 arranged between the two expanders 14', 14". In this way, the second expander 14" can be by-passed when not needed.

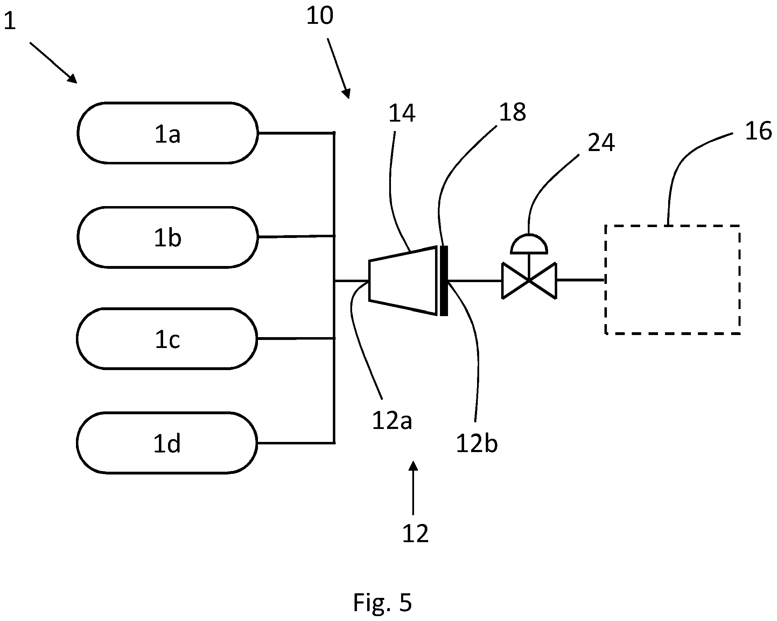

**FIG. 5** is an exemplary overview of a pressure reduction unit connected to a high-pressure gas supply and a low-pressure gas consumer at a low-pressure expansion stage end according to a fourth example. In this example, the pressure reduction unit 10 comprises a pressure regulation valve 24 arranged between the low-pressure expansion stage end 12b and the low-pressure gas consumer 16. The pressure regulation valve 24 can be included if additional fine tuning of the low pressure to be delivered to the low-pressure gas consumer 16 is needed. The pressure regulation valve 24 can of course be included in the examples of FIGS. 3 and 4 comprising more than one expander 14.

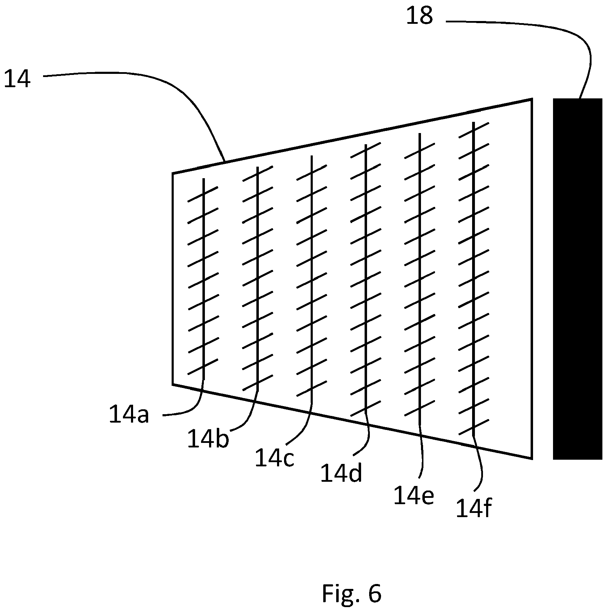

**FIG. 6** is an exemplary overview of an expander according to an example. The expander 14 is a multiple stage axial expander comprising a number of pressure reduction stages. In FIG 6, the number of pressure reduction stages in the expander 14 is six. Generally, the number of pressure reduction stages in an expander is between three and ten, specifically between five and eight.

The at least one expander 14 is made of stainless steel, aluminium or titanium.

In **FIG. 6**, the expander 14 comprises a first magnet acting as a drive magnet arranged inside the expander and a second magnet that is driven by the drive magnet arranged in the generator 18. This magnetically connects the generator 18 to the multiple stage axial expander 14.

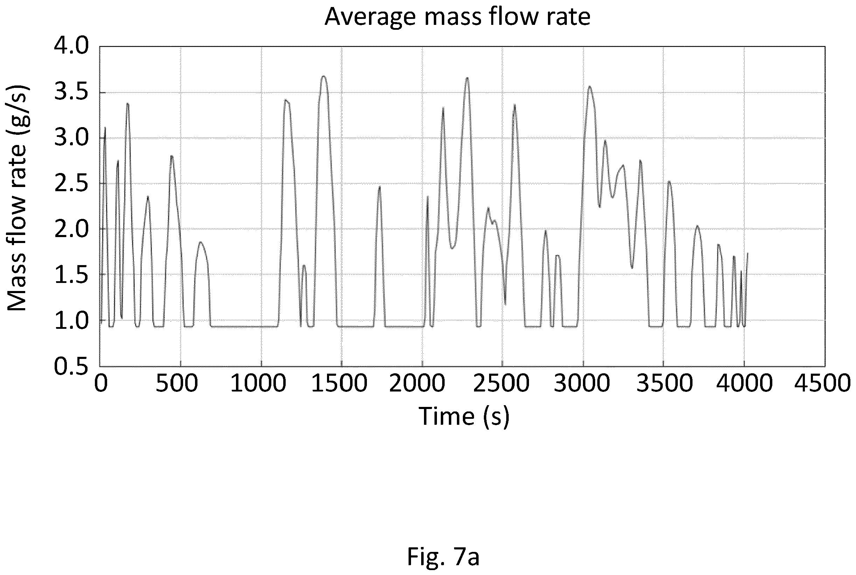

**FIG. 7a** is an exemplary overview of a fuel cell in a truck being fed with different fuel mass flow rates over a cycle. The cycle is from an example round trip between Borås and Landvetter in Västra Götaland, Sweden. Depending on desired speed and incline of the road, the mass flow rates varies as can be seen in the figure.

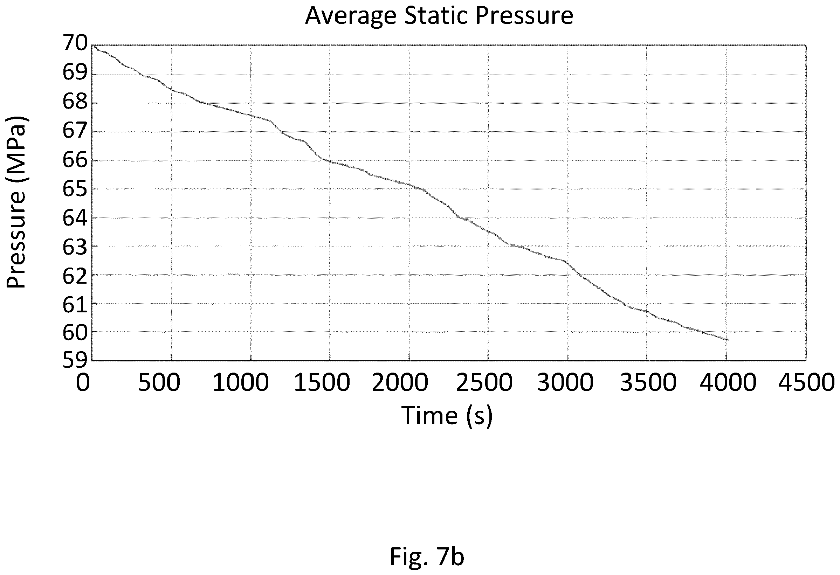

**FIG. 7b** is an exemplary overview of the reduction of fuel tank gas pressure, given the fuel consumption of **FIG. 7a**. **FIG. 7b** shows the pressure in the fuel tank of the truck over the same cycle as in **FIG. 7a**. As can be seen, the pressure is reduced from a starting pressure of about 70 MPa to a final pressure of between 59 and 60 MPa. With that fuel flow rate at that given gas pressure, it is possible along that route recover energy with this approach the equivalent to 1.9% of the H2 fuel mass used in the cycle.

According to results from several cycles, the average reduction in fuel consumption, even during high power demand cycles, is around 1.8%. Thus, the recovery of gas compression work leads to an improvement in fuel consumption in the vehicle.

This same concept of high-pressure gas compression work can be applied to a H₂ internal combustion engine (ICE) operating on low pressure direct injection fuel system, so the gas will be expanded from fuel tank pressure down to around 30 - 50bar. It can also be applied to other systems that utilize a high-pressure gas that needs to go to a very low pressure, so the examples above are not limited to fuel cells and ICEs.

As a further example, the pressure reduction unit 10 will improve fuel consumption in a genset or generator set using high-pressure gas as a fuel supply that needs to be delivered with a lower pressure to drive the genset.

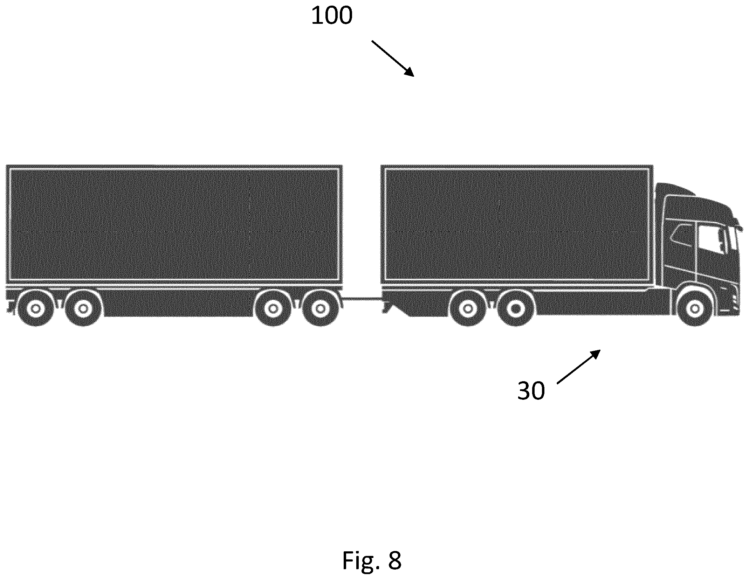

**FIG. 8** is an exemplary overview of a vehicle comprising a fuel delivery system according to an example. In **FIG. 8**, a truck comprising a fuel delivery system 30 is shown. The fuel delivery system 30 is for a gas-powered engine comprising a high-pressure gas supply 1 and a low-pressure gas consumer 16 in the form of a fuel cell or an internal combustion engine such as a gas engine and can be powered by compressed hydrogen gas or compressed natural gas. The fuel delivery system 30 comprises a pressure reduction unit 10 according to any one of the above described examples to recover at least part of the gas compression work.

The low-pressure gas consumer 16 can also be a low-pressure tank for intermediate storage of low-pressure gas before it is passed onto a low-pressure gas consumer.

As described above, the high-pressure gas supply 1 operates at a pressure in the range of between 5 and 90 MPa and the low-pressure gas consumer 16 operates at a pressure in the range of between 0.5 and 5 MPa.

The vehicle 100 may alternatively be another type of heavy-duty vehicle such as a bus, or a construction equipment vehicle. The vehicle 100 may also be a ship or a boat.

As an example, in the case of a fuel cell electric vehicle, high-pressure fuel gas can be expanded in the expander to reduce its pressure down to a fuel cell feeding pressure.

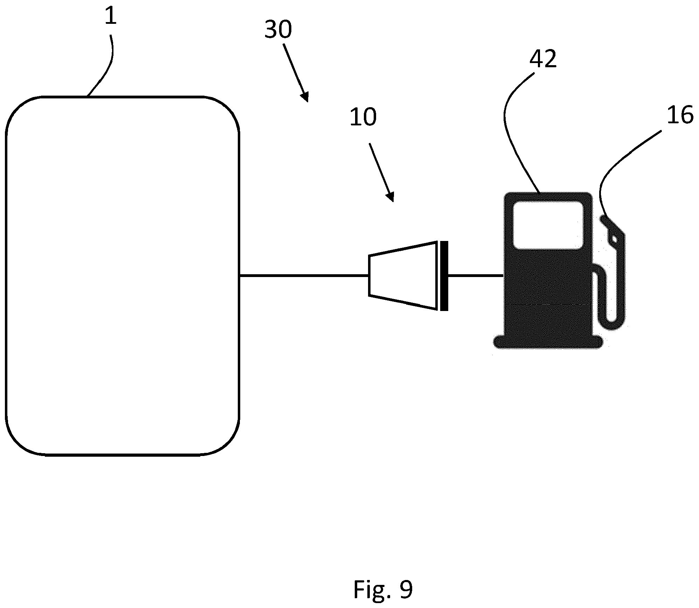

**FIG. 9** is an exemplary overview of a gas delivery system 40 for a gas fuelling pump 42 comprising a fuel delivery system 30 according to an example. Another example of where the pressure reduction unit 10 can be installed is in a gas delivery system 40 for a gas fuelling pump 42. The gas delivery system comprises a high-pressure gas supply 1 and a low-pressure gas fuel nozzle 16 for fuelling of gas vehicles or similar. A pressure reduction unit 10 according to any one of the above examples is arranged between high-pressure gas supply 1 and the low-pressure gas fuel nozzle 16 to recover at least part of the gas compression work. In this way, recovery of gas compression work can be used to generate electricity to a grid or to appliances connected to the fuelling pump or a pump station in which it is installed.

As described above, the high-pressure gas supply 1 operates at a pressure in the range of between 5 and 90 MPa and the low-pressure gas fuel nozzle 16 operates at a pressure in the range of between 0.5 and 5 MPa.

This can be expanded to include internal combustion engines (ICE) operating with various gaseous fuels at low pressures, where the fuel storage system is at a much higher pressure and, to other systems where similar high-pressure to low-pressure conditions exist.

Example 1: A pressure reduction unit for recovery of gas compression work, the pressure reduction unit comprising an expansion stage comprising at least one expander, wherein the expansion stage is arranged to be connected to a high-pressure gas supply at a high-pressure expansion stage end and to be connected to a low-pressure gas consumer at a low-pressure expansion stage end, wherein the expansion stage further comprises a contactless power transfer device arranged to provide mechanical power to an external mechanical load, characterized in that a bearing arranged at the interface between the high-pressure gas supply and the high-pressure expansion stage end is a non-contact bearing.

Example 2: The pressure reduction unit according to example 1, wherein the non-contact bearing is a hydrodynamic fluid bearing using high-pressure gas from the high-pressure gas supply as the bearing fluid or a magnetic bearing.

Example 3: The pressure reduction unit according to example 1 or 2, wherein the expansion stage is arranged to provide low pressure gas to the low-pressure gas consumer with a low pressure in the range of between 0.5 and 5 MPa and to receive a high-pressure gas from the high-pressure gas supply with a high pressure in the range of 5 and 90 MPa, as long as the pressure in the high-pressure gas supply is higher than the low pressure.

Example 4: The pressure reduction unit according to any one of the preceding examples, wherein the expansion stage comprises two expanders arranged in series.

Example 5: The pressure reduction unit according to example 4, wherein a by-pass circuit comprising a by-pass valve is arranged between the two expanders.

Example 6: The pressure reduction unit according to any one of the preceding examples, wherein the at least one expander is a multiple stage axial expander comprising a number of pressure reduction stages.

Example 7: The pressure reduction unit according to example 6, wherein the number of pressure reduction stages in the at least one expander are between three and ten, specifically between five and eight.

Example 8: The pressure reduction unit according to any one of the preceding examples, wherein the at least one expander is made of stainless steel, aluminium or titanium.

Example 9: The pressure reduction unit according to any one of the preceding examples, wherein a pressure regulation valve is arranged between the low-pressure expansion stage end and the low-pressure gas consumer.

Example 10: A fuel delivery system for a gas-powered engine comprising a high-pressure gas supply and a low-pressure gas consumer, wherein a pressure reduction unit according to any one of examples 1-9 is arranged between high-pressure gas supply and the low-pressure gas consumer to recover at least part of the gas compression work.

Example 11: The fuel delivery system according to example 10, wherein the low-pressure gas consumer is a gas engine or a fuel cell.

Example 12: The fuel delivery system according to example 10, wherein the low-pressure gas consumer is a low-pressure tank.

Example 13: The fuel delivery system according to any one of examples 10-12, wherein the high-pressure gas supply operates at a pressure in the range of between 5 and 90 MPa and the low-pressure gas consumer operates at a pressure in the range of between 0.5 and 5 MPa.

Example 14: A genset comprising a fuel delivery system according to any one of examples 10-13.

Example 15: A vehicle comprising a fuel delivery system according to any one of examples 10-13.

Example 16: The vehicle according to example 15, wherein the vehicle is fuelled by compressed hydrogen gas or compressed natural gas.

Example 17: The vehicle according to example 15 or 16, wherein the vehicle is a heavy-duty vehicle, such as a truck, a bus, or a construction equipment vehicle.

Example 18: The vehicle according to example 15 or 16, wherein the vehicle is a ship or a boat.

Example 19: A gas delivery system for a gas fuelling pump comprising a high-pressure gas supply and a low-pressure gas fuel nozzle, wherein a pressure reduction unit according to any one of examples 1-8 is arranged between high-pressure gas supply and the low-pressure gas fuel nozzle to recover at least part of the gas compression work.

Example 20: The gas delivery system according to example 19, wherein the high-pressure gas supply operates at a pressure in the range of between 5 and 90 MPa and the low-pressure gas fuel nozzle operates at a pressure in the range of between 0.5 and 5 MPa.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A pressure reduction unit (10) for recovery of gas compression work, the pressure reduction unit (10) comprising an expansion stage (12) comprising at least one expander (14), wherein the expansion stage (12) is arranged to be connected to a high-pressure gas supply (1) at a high-pressure expansion stage end (12a) and to be connected to a low-pressure gas consumer (16) at a low-pressure expansion stage end (12b), wherein the expansion stage (12) further comprises a contactless power transfer device arranged to provide mechanical power to an external mechanical load (18), **characterized in that** a bearing arranged at the interface between the high-pressure gas supply (1) and the high-pressure expansion stage end (12a) is a non-contact bearing.

2. The pressure reduction unit (10) according to claim 1, wherein the non-contact bearing is a hydrodynamic fluid bearing using high-pressure gas from the high-pressure gas supply (1) as the bearing fluid or a magnetic bearing.

3. The pressure reduction unit (10) according to claim 1 or 2, wherein the expansion stage (12) is arranged to provide low pressure gas to the low-pressure gas consumer (16) with a low pressure in the range of between 0.5 and 5 MPa and to receive a high-pressure gas from the high-pressure gas supply (1) with a high pressure in the range of 5 and 90 MPa, as long as the pressure in the high-pressure gas supply is higher than the low pressure.

4. The pressure reduction unit (10) according to any one of the preceding claims, wherein the expansion stage (12) comprises two expanders (14', 14") arranged in series.

5. The pressure reduction unit (10) according to claim 4, wherein a by-pass circuit (20) comprising a by-pass valve (22) is arranged between the two expanders (14', 14").

6. The pressure reduction unit (10) according to any one of the preceding claims, wherein the at least one expander (14) is a multiple stage axial expander comprising a number of pressure reduction stages (14a-14f).

7. The pressure reduction unit (10) according to claim 6, wherein the number of pressure reduction stages in the at least one expander (14) are between three and ten, specifically between five and eight.

8. The pressure reduction unit (10) according to any one of the preceding claims, wherein the at least one expander (14) is made of stainless steel, aluminium or titanium.

9. The pressure reduction unit (10) according to any one of the preceding claims, wherein a pressure regulation valve (24) is arranged between the low-pressure expansion stage end (12b) and the low-pressure gas consumer (16).

10. A fuel delivery system (30) for a gas-powered engine comprising a high-pressure gas supply (1) and a low-pressure gas consumer (16), wherein a pressure reduction unit (10) according to any one of claims 1-9 is arranged between high-pressure gas supply (1) and the low-pressure gas consumer (16) to recover at least part of the gas compression work.

11. The fuel delivery system (30) according to claim 10, wherein the low-pressure gas consumer (16) is a gas engine or a fuel cell.

12. The fuel delivery system (30) according to claim 10, wherein the low-pressure gas consumer (16) is a low-pressure tank.

13. The fuel delivery system (30) according to any one of claims 10-12, wherein the high-pressure gas supply (1) operates at a pressure in the range of between 5 and 90 MPa and the low-pressure gas consumer (16) operates at a pressure in the range of between 0.5 and 5 MPa.

14. A genset comprising a fuel delivery system (30) according to any one of claims 10-13.

15. A vehicle (100) comprising a fuel delivery system (30) according to any one of claims 10-13.

16. The vehicle (100) according to claim 15, wherein the vehicle (100) is fuelled by compressed hydrogen gas or compressed natural gas.

17. The vehicle (100) according to claim 15 or 16, wherein the vehicle (100) is a heavy-duty vehicle, such as a truck, a bus, or a construction equipment vehicle.

18. The vehicle (100) according to claim 15 or 16, wherein the vehicle (100) is a ship or a boat.

19. A gas delivery system (40) for a gas fuelling pump (42) comprising a high-pressure gas supply (1) and a low-pressure gas fuel nozzle (16), wherein a pressure reduction unit (10) according to any one of claims 1-8 is arranged between high-pressure gas supply (1) and the low-pressure gas fuel nozzle (16) to recover at least part of the gas compression work.

20. The gas delivery system (40) according to claim 19, wherein the high-pressure gas supply (1) operates at a pressure in the range of between 5 and 90 MPa and the low-pressure gas fuel nozzle (16) operates at a pressure in the range of between 0.5 and 5 MPa.
